# EUROPEAN PATENT SPECIFICATION

(11) **EP 1 338 377 B1**
(45) Date of publication and mention of the grant of the patent: **22.04.2009**
(21) Application number: 03003344.3
(22) Date of filing: 13.02.2003
(51) Int. Cl.: B23Q 3/155, B23Q 3/157, B23B 31/107

(54) **Drilling unit for components of wood or similar and associated tool spindle**
Bohreinheit zur Bearbeitung von Holzteilen oder dergleichen und Werkzeugspindel dafür
Appareil de perçage pour l'usinage d'éléments de bois ou similaires et broche porte-outil associée

(30) Priority: 15.02.2002 IT BO20020073
(43) Date of publication of application: 27.08.2003
(73) Proprietor: BIESSE S.p.A., 61100 Pesaro (IT)
(72) Inventor: Bernardi, Paolo, 47841 Cattolica (IT)
(74) Representative: Jorio, Paolo

(56) References cited:
- DE-A- 3 341 252
- DE-A- 3 605 970
- DE-A- 4 203 158
- DE-A- 19 858 791
- US-A- 3 788 658
- PATENT ABSTRACTS OF JAPAN vol. 1998, no. 01, 30 January 1998 (1998-01-30) -& JP 09 225711 A (FUJI SEIKO KK; TOYOTA MOTOR CORP), 2 September 1997 (1997-09-02)

## Description

The present invention relates to a drilling unit for components of wood or similar.

In woodworking, a drilling unit is employed comprising a number of tool spindles, each mounted to rotate about a respective longitudinal axis, and each comprising a tubular end portion engaged by a tool shank - in this case, of a drill bit - which is locked axially and angularly to the spindle by first and second connecting means respectively.

The second connecting means normally comprise at least one seat formed, parallel to said axis, in the tool shank; and a pin projecting radially from said tubular end portion, and which, when changing the tool, must be fitted inside the seat -by means of a series of complicated, precise movements. That is, the tool is first moved axially to engage the shank inside the tubular end portion; is then rotated with respect to the spindle so that the seat is positioned substantially facing the pin; and, finally, is moved axially so that the pin engages the seat.

In known drilling units of the above type, tool change is therefore performed manually by the operator, and so involves a good deal of time.

To avoid frequent stoppages to change the tools manually, known drilling units of the above type are normally equipped with a relatively large number of tool spindles - at times, even more than 45. And since all the tool spindles are operated simultaneously by a single motor and a belt or gear transmission device, equipping the drilling unit with a large number of tool spindles poses several drawbacks, foremost of which are installed power, noise, and relatively high power consumption.

Document DE 198 58 791 relates to a drilling system for components of wood or similar comprising a number of drilling units, each coupled to an actuating device and provided with a number of tool spindles; a store for a number of drilling units; and changeover means for selectively moving at least one drilling unit to and from a changeover position, in which the drilling unit simultaneously engages the relative actuating device and the changeover means.

Document DE 36 05 970 relates to a drilling unit comprising a number of tool spindles mounted to rotate about respective longitudinal axes and able to engage respective drill bits, each axially locked to the relative spindle by means of a connecting device comprising a sleeve movable along the relevant longitudinal axis and a number of lock pins.

The drill bit is automatically changed by means of a toolholder member, which acts on the sleeve to move the lock pins from a lock position to a release position when the toolholder member and relative spindle are moved into a tool-change position, is substantially in the form of a fork, and comprises two substantially parallel arms and an actuating device for moving the arms parallel to each other between a locking position and a release position of the drill bit.

It is an object of the present invention to provide a drilling unit for components of wood or similar, designed to eliminate the aforementioned drawbacks.

More specifically, it is an object of the present invention to provide a drilling unit enabling selective, automatic tool change, i.e. of the drill bits.

According to the present invention, there is provided a drilling unit as claimed in claim 1. The dependent claims describe further embodiments of the invention.

A non-limiting embodiment of the present invention will be described by way of example with reference to the accompanying drawings, in which:
Figure 1 shows a schematic view in perspective, with parts removed for clarity, of a preferred embodiment of the drilling unit according to the present invention;
Figures 2 and 3 show a schematic longitudinal section of a first detail of Figure 1 in two different operating positions;
Figure 4 shows a schematic view in perspective of a second detail of Figure 1.

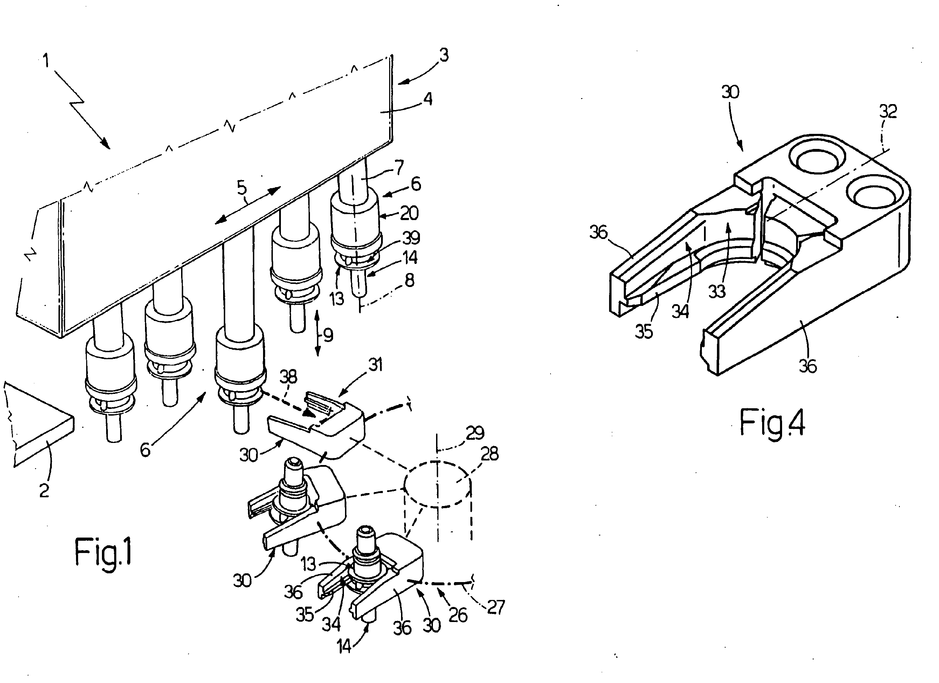

Number 1 in Figure 1 indicates as a whole a machine for machining components 2 of wood or similar, and defined, in the example shown, by substantially flat, substantially rectangular-section, parallelepiped-shaped panels 2.

Machine 1 has at least one drilling unit 3, which comprises a tubular supporting frame 4 extending in a horizontal direction 5, and a number of tool spindles 6 equally spaced along frame 4 and aligned in direction 5.

Each spindle 6 comprises a shaft 7, which is fitted in rotary and axially sliding manner to frame 4 to rotate, with respect to frame 4, about a respective vertical longitudinal axis 8, and to move, with respect to frame 4 and in a direction 9 parallel to axis 8, between a raised drilling position and a lowered tool-change position.

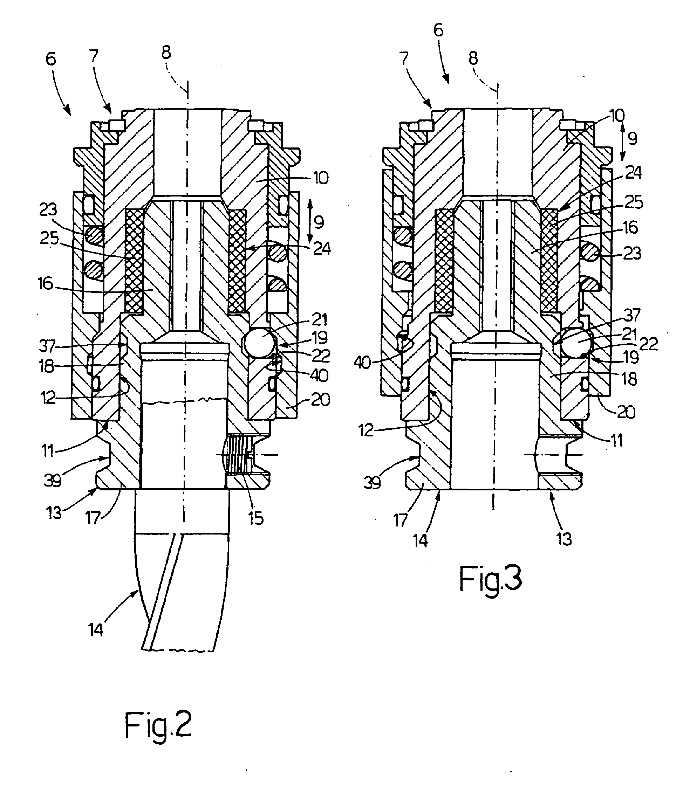

With reference to Figures 2 and 3, shaft 7 comprises a tubular end portion 10, which is coaxial with axis 8, projects at least partly from frame 4, is defined at the bottom by a flat surface 11 crosswise to axis 8, and has a seat 12 for receiving and locating a shank 13 of a relative known drill bit 14 locked axially to shank 13 by a threaded pin 15.

Shank 13 comprises a narrow top portion 16 housed inside portion 10 and having a diameter smaller than a diameter of portion 10; a wide bottom portion 17 substantially outside portion 10 and contacting surface 11; and an intermediate portion 18 extending inside portion 10, between portions 16 and 17, and having a diameter approximately equal to but no larger than the diameter of portion 10.

Shank 13 is locked axially to portion 10 by a connecting device 19 comprising a sleeve 20, which extends about portion 10, coaxially with axis 8, and is fitted in axially sliding manner to portion 10 to move linearly along portion 10 in direction 9.

Device 19 also comprises a number of - in the example shown, three - lock balls 21 (only one shown in Figures 2 and 3) equally spaced about axis 8, and each housed inside a respective radial seat 22 formed through portion 10 and crosswise to axis 8.

Seats 22 are so shaped as to allow respective balls 21 to move crosswise to axis 8 - when sleeve 20 is moved in direction 9, and as described in detail later on - between a lock position (Figure 2) locking bit 14 to spindle 6, and a release position (Figure 3).

Device 19 also comprises a spring 23 coaxial with axis 8 and interposed between portion 10 and sleeve 20 to move sleeve 20 into, and normally maintain it in, a work position (Figure 2) corresponding to the lock position of balls 21.

Shank 13 is locked angularly to portion 10 by a connecting device 24 comprising a known free wheel 25, which is housed inside seat 12, coaxially with axis 8, is connected in angularly and axially fixed manner to portion 10, and is interposed between seat 12 and portion 16 to make bit 14 angularly integral with spindle 6 in the rotation direction of spindle 6, and idle with respect to spindle 6 in the opposite rotation direction to that of spindle 6.

Drilling unit 3 also comprises a store 26 for housing a number of bits 14, and in turn comprising a flat, substantially circular plate 27 fitted to a powered shaft 28 mounted to rotate, with respect to a fixed frame (not shown) of machine 1 and by virtue of a known actuating device (not shown), about a respective longitudinal axis 29 substantially parallel to direction 9.

Plate 27 has a number of toolholder members 30 equally spaced along a peripheral edge of plate 27 and about axis 29, and which are fed by plate 27 through a tool-change station 31.

As shown in Figure 4, each member 30 is substantially in the form of a fork, which has an axis 32 of symmetry crosswise to axis 29, defines a seat 33 for a relative bit 14, is defined internally by a substantially flat lateral surface 34, and has a peripheral edge 35 projecting inwards from and perpendicular to surface 34. Member 30 also comprises two arms 36 extending parallel to and on opposite sides of axis 32, and the height of which, measured parallel to direction 9, varies parallel to axis 32, and is least at the respective free ends.

Operation of drilling unit 3 will now be described with reference to one spindle 6, and as of a condition in which the spindle 6 considered is fitted with a bit 14 (Figure 1), and store 26 has only one vacant seat 33. In the above condition, sleeve 20 is set by spring 23 to the work position, and lock balls 21 are set to the lock position engaging an annular cavity 37, formed in an outer surface of portion 18, to retain shank 13 inside seat 12.

When spindle 6 completes a given drilling stage of a relative panel 2 and a new tool is required, shaft 28 is operated to rotate plate 27 about axis 29 and feed said vacant seat 33 into tool-change station 31; shaft 7 is moved into the lowered tool-change position; and drilling unit 3 is moved in an insertion direction 38, perpendicular to directions 5 and 9 and parallel to axis 32 of seat 33, to set spindle 6 and store 26 to a tool-change position, in which bit 14 simultaneously engages portion 10 and seat 33.

When inserting bit 14 inside seat 33, the two arms 36 surround portion 17, so that edge 35 engages an annular cavity 39 formed in an outer surface of portion 17, and engage and move sleeve 20, in opposition to spring 23, into a rest position (Figure 3).

At this point, shaft 7 is raised in direction 9 to allow lock balls 21 to move crosswise to axis 8 into an annular cavity 40 formed in an inner surface of sleeve 20, and into a position separated from one another by a distance approximately equal to but no less than the diameter of portion 18 of shank 13, so that shank 13 is released from seat 12 while remaining attached to seat 33. Once shank 13 is released, sleeve 20 and balls 21 are restored by spring 23 to their respective work and lock positions.

At this point, shaft 28 is again operated to rotate plate 27 about axis 29 and feed anew member 30 and a new bit 14 into tool-change station 31 and into a position coaxial with shaft 7; and shaft 7 is lowered back into the tool-change position, so that seat 12 engages shank 13 of the new bit 14.

As shaft 7 moves in direction 9, sleeve 20 contacts arms 36 of the new member 30 and is raised into the rest position in opposition to spring 23; and balls 21 move crosswise to axis 8 into cavity 40 to allow portion 10 to fully engage shank 13, so that surface 11 contacts portion 17.

Finally, drilling unit 3 is moved in insertion direction 38 to release portion 17 from member 30; and sleeve 20 is moved by spring 23 back into the work position, so that balls 21 move crosswise to axis 8 from cavity 40 into cavity 37, and connecting device 19 engages and retains shank 13 fully inside seat 12.

In a variation not shown, connecting device 24 and, therefore, free wheel 25 are replaced by a connecting device comprising a seat formed in portion 10 and parallel to axis 8; a coupling member projecting radially outwards from the outer surface of shank 13 to engage said seat when shank 13 is inserted inside portion 10; and an encoder fitted to spindle 6 to selectively control the angular position of spindle 6 about axis 8, and so ensure correct insertion of the coupling member inside the seat.

In a further variation not shown, plate 27 of store 26 is replaced by a supporting base extending in direction 5, and having a number of toolholder members 30 equally spaced along the base and aligned in direction 5. This design of store 26 provides for changing one or more bits 14 simultaneously, 14 and for selectively controlling both the new bit 14 to be fitted to each spindle 6, and the bits 14 to be changed simultaneously at the same tool-change stage.

Drilling unit 3 therefore comprises a relatively small number of bits 14, and provides for changing bits 14 selectively and automatically.

## Claims

1. A drilling unit for components (2) of wood or similar, comprising a number of tool spindles (6), each spindle (6) being mounted to rotate about a respective longitudinal axis (8), and comprising an end portion (10) for engaging a shank (13) of a relative drill bit (14); first and second connecting means (19, 24) for axially and angularly locking each drill bit (14) to the relative spindle (6) respectively, wherein said first connecting means (19) comprise a sleeve (20) coaxial with and movable along said axis (8), a first seat (40) formed in an inner surface of said sleeve (20), a second seat (37) formed in the shank (13), a number of third seats (22) formed through said end portion (10), a number of lock balls (21) equal in number to said third seats (22), and first actuating means (23) which act on the sleeve (20) to move said lock balls (21) from a release position, in which each lock ball (21) simultaneously engages the relative third seat (22) and said first seat (40), to a lock position, in which each lock ball (21) simultaneously engages the relative third seat (22) and said second seat (37); a store (26), in turn comprising a number of toolholder members (30), each having a respective fourth seat (33) for receiving a respective said drill bit (14); and second actuating means for selectively moving at least one spindle (6) and at least one toolholder member (30) with respect to each other and to and from a tool-change position, in which the relative drill bit (14) simultaneously engages the relative said fourth seat (33) and the spindle (6); each toolholder member (30) comprising release means (36), which act on the relative said sleeve (20) to move the relative lock balls (21) into said release position when the toolholder member (30) and relative spindle (6) are moved into said tool-change position, being substantially in the form of a fork, and comprising two substantially parallel arms (36) defining said release means (36); and **characterized in that** the height of each arm (36), measured parallel to said axis (8), varies in an insertion direction (38) of the drill bit (14) inside the toolholder member (30).

2. A drilling unit as claimed in Claim 1, wherein said second connecting means (24) comprise a free wheel (25) interposed between said end portion (10) and said shank (13) to rotate the drill bit (14) about said axis (8)

3. A drilling unit as claimed in Claim 1 or 2, wherein said first actuating means (23) are elastic thrust means for normally maintaining the lock balls (21) in said lock position.

4. A drilling unit as claimed in any of the preceding Claims, wherein said first actuating means (23) comprise at least one spring (23) coaxial with said axis (8) and interposed between the end portion (10) and the sleeve (20).

5. A drilling unit as claimed in any of the preceding Claims, wherein said shank (13) comprises a guide (39), which is engaged in sliding manner by said arms (36) upon a relative movement of the drill bit (14) and the toolholder member (30) in said insertion direction (38).

6. A drilling unit as claimed in Claim 1, wherein said second connecting means (24) comprise a fifth seat formed axially through one of said shank (13) and said end portion (10), and a coupling member projecting radially from the other of said shank (13) and said end portion (10), and for engaging said fifth seat.

7. A drilling unit as claimed in Claim 6, wherein the spindle (6) has control means for selectively controlling the angular position of the spindle (6) about said axis (8) to enable said coupling member to engage said fifth seat upon insertion of the shank (13) inside the end portion (10).

## Patentansprüche

1. Bohreinheit für Komponenten (2) aus Holz oder ähnlichem, welche eine Anzahl von Werlczeugspindeln (6) umfasst, wobei jede Spindel (6) befestigt ist, um um eine entsprechende Längsachse (8) zu drehen, und einen Endbereich (10) umfasst, um einen Schaft (13) einer jeweiligen Bohrerspitze (14) zu erfassen; eine erste und zweite Verbindungseinrichtung (19,24) zum entsprechenden axialen und winkelförmigen Festhalten jeder Bohrerspitze (14) an der jeweiligen Spindel (6), wobei die erste Verbindungseinrichtung (19) eine Hülse (20) koaxial mit und bewegbar längs der Achse (8) umfasst, einen ersten Sitz (40), der in einer inneren Fläche der Hülse (20) gebildet ist, einen zweiten Sitz (37), der im Schaft (13) gebildet ist, eine Anzahl dritter Sitze (22), welche durch den Endbereich (10) hindurch gebildet sind, eine Anzahl von Festhaltekugeln (21), welche zahlenmäßig gleich den dritten Sitzen (22) sind, und eine erste Betätigungseinrichtung (23), welche auf die Hülse (20) wirkt, um die Festhaltekugeln (21) von einer Löseposition zu bewegen, wobei jede Festhaltekugel (21) simultan den jeweiligen dritten Sitz (22) und den ersten Sitz (40) bis zu einer Verriegelungsposition erfasst, in welcher jede Festhaltekugel (21) simultan den jeweiligen dritten Sitz (22) und den zweiten Sitz (37) erfasst; und einen Speicher (26), der dann wieder eine Anzahl von Werkzeughalterteilen (30) umfasst, wobei jedes einen entsprechenden vierten Sitz (33) hat, um eine entsprechende Bohrerspitze (14) aufzunehmen; und eine zweite Betätigungseinrichtung, um zumindest eine Spindel (6) und zumindest ein Werkzeughalterteil (30) in Bezug zueinander zu und von einer Werkzeugänderungsposition zu bewegen, in welcher die jeweilige Bohrerspitze (14) den jeweiligen vierten Sitz (33) und die Spindel (6) simultan erfasst; wobei jedes Werkzeughalterteil (30) eine Löseeinrichtung (36) umfasst, welche auf die jeweilige Hülse (20) wirkt, um die jeweiligen Festhaltekugeln (21) in die Löseposition zu bewegen, wenn das Werkzeughalterteil (30) und die jeweilige Spindel (6) in die Werkzeugänderungsposition bewegt werden, wobei diese im Wesentlichen in Form einer Gabel ist, und zwei im Wesentlichen parallele Arme (36) umfasst, welche die Löseeinrichtung (36) begrenzen, und **dadurch gekennzeichnet ist, dass** die Höhe jedes Arms (36), gemessen parallel zur Achse (8), in einer Einführungsrichtung (38) der Bohrerspitze (4) innerhalb des Werkzeughalterteils (30) variiert.

2. Bohreinheit nach Anspruch 1, wobei die zweite Verbindungseinheit (24) ein freies Rad (25) umfasst, welches zwischen dem Endbereich (10) und dem Schaft (13) angeordnet ist, um die Bohrerspitze (14) um die Achse (8) zu drehen.

3. Bohreinheit nach Anspruch 1 oder 2, wobei die erste Betätigungseinheit (23) eine elastische Schubeinrichtung ist, um normalerweise die Festhaltekugeln (21) in der Verriegelungsposition zu halten.

4. Bohreinheit nach einem der vorhergehenden Ansprüche, wobei die erste Betätigungseinrichtung (23) zumindest eine Feder (23) koaxial mit der Achse (8) umfasst und welche zwischen dem Endbereich (10) und der Hülse (20) angeordnet ist.

5. Bohreinheit nach einem der vorhergehenden Ansprüche, wobei der Schaft (13) eine Führung (39) umfasst, welche in gleitender Weise durch die Arme (36) bei einer Relativbewegung der Bohrerspitze (14) und dem Werkzeughalterteil (30) in der Einführungsrichtung (38) eingreift,

6. Bohreinheit nach Anspruch 1, wobei die zweite Verbindungseinrichtung (24) einen fünften Sitz umfasst, der axial durch eines von dem Schaft (13) und dem Endbereich (10) hindurch gebildet ist, und ein Koppelteil, welches radial von dem anderen von dem Schaft (13) und dem Endbereich (10) ragt, und um den fünften Sitz zu erfassen.

7. Bohreinheit nach Anspruch 6, wobei die Spindel (6) eine Steuereinrichtung hat, um die Winkelposition der Spindel (6) um die Achse (8) selektiv zu steuern, um zu ermöglichen, dass das Koppelteil den fünften Sitz beim Einführen des Schaftes (13) innerhalb des Endbereichs (10) erfasst.

## Revendications

1. Unité de perçage d'éléments (2) de bois ou similaires, comprenant un nombre de broches porte-outil (6), chaque broche (6) étant montée de façon à tourner autour d'un axe longitudinal respectif (8), et comprenant une partie d'extrémité (10) pour mettre en prise une queue (13) d'un foret relatif (14) ; des premiers et deuxièmes moyens de raccord (19, 24) pour verrouiller axialement et de manière angulaire chaque foret (14) à la broche relative (6) respectivement, dans laquelle lesdits premiers moyens de raccord (19) comprennent un manchon (20) coaxial avec et mobile le long dudit axe (8), un premier siège (40) formé dans une surface intérieure dudit manchon (20), un deuxième siège (37) formé dans la queue (13), un nombre de troisièmes sièges (22) formés à travers ladite partie d'extrémité (10), un nombre de billes de verrouillage (21) en nombre égal auxdits troisièmes sièges (22), et des premiers moyens d'actionnement (23) qui agissent sur le manchon (20) pour déplacer lesdites billes de verrouillage (21) à partir d'une position de libération, dans laquelle chaque bille de verrouillage (21) met en prise simultanément le troisième siège relatif (22) et ledit premier siège (40), jusqu'à une position de verrouillage, dans laquelle chaque bille de verrouillage (21) met en prise simultanément le troisième siège relatif (22) et ledit deuxième siège (37) ; un magasin (26), comprenant à son tour un nombre d'éléments porte-outil (30), chacun ayant un quatrième siège respectif (33) pour recevoir l'un desdits forets respectifs (14) ; et des deuxièmes moyens d'actionnement pour déplacer de manière sélective au moins une broche (6) et au moins un élément porte-outil (30) les uns par rapport aux autres et vers et depuis une position d'échange d'outils, dans laquelle le foret relatif (14) met en prise simultanément ledit quatrième siège relatif (33) et la broche (6) ; chaque élément porte-outil (30) comprenant des moyens de libération (36), qui agissent sur ledit manchon relatif (20) pour déplacer les billes de verrouillage relatives (21) dans ladite position de libération quand l'élément porte-outil (30) et la broche relative (6) sont déplacés dans ladite position d'échange d'outils, qui est sensiblement sous la forme d'une fourche, et comprenant deux bras sensiblement parallèles (36) définissant lesdits moyens de libération (36) ; et **caractérisé en ce que** la hauteur de chaque bras (36), mesurée de manière parallèle audit axe (8), varie dans une direction d'insertion (38) du foret (14) à l'intérieur de l'élément porte-outil (30).

2. Unité de perçage selon la revendication 1, dans laquelle lesdits deuxièmes moyens de raccord (24) comprennent une roue libre (25) intercalée entre ladite partie d'extrémité (10) et ladite queue (13) pour faire tourner le foret (14) autour dudit axe (8).

3. Unité de perçage selon la revendication 1 ou 2, dans laquelle lesdits premiers moyens d'actionnement (23) sont des moyens de poussée élastique pour maintenir normalement les billes de verrouillage (21) dans ladite position de verrouillage.

4. Unité de perçage selon l'une quelconque des revendications précédentes, dans laquelle lesdits premiers moyens d'actionnement (23) comprennent au moins un ressort (23) coaxial audit axe (8) et intercalé entre la partie d'extrémité (10) et le manchon (20).

5. Unité de perçage selon l'une quelconque des revendications précédentes, dans laquelle ladite queue (13) comprend un guide (39), qui est mis en prise de manière coulissante par lesdits bras (36) lors d'un mouvement relatif du foret (14) et de l'élément porte-outil (30) dans ladite direction d'insertion (38).

6. Unité de perçage selon la revendication 1, dans laquelle lesdits deuxièmes moyens de raccord (24) comprennent un cinquième siège formé de manière axiale à travers l'une parmi ladite tige (13) et ladite partie d'extrémité (10), et un élément de couplage faisant saillie de manière radiale de l'autre parmi ladite tige (13) et ladite partie d'extrémité (10), et pour mettre en prise ledit cinquième siège.

7. Unité de perçage selon la revendication 6, dans laquelle la broche (6) possède des moyens de commande pour commander de manière sélective la position angulaire de la broche (6) autour dudit axe (8) pour permettre audit élément de couplage de mettre en prise ledit cinquième siège lors de l'insertion de la queue (13) à l'intérieur de la partie d'extrémité (10).
